# FASCICULE DE BREVET EUROPEEN

(11) **EP 4 136 331 B1**
(45) Date de publication et mention de la délivrance du brevet: **29.10.2025**
(21) Numéro de dépôt: 21718563.6
(22) Date de dépôt: 13.04.2021
(51) Int. Cl.: F01P 3/00, B60H 1/00

(54) **DISPOSITIF DE CHAUFFAGE, VENTILATION ET/OU CLIMATISATION POUR VEHICULE AUTOMOBILE**
HEIZUNGS-, LÜFTUNGS- UND/ODER KLIMAANLAGE FÜR EIN KRAFTFAHRZEUG
HEATING, VENTILATION AND/OR AIR-CONDITIONING DEVICE FOR A MOTOR VEHICLE

(30) Priorité: 15.04.2020 FR 2003802
(43) Date de publication de la demande: 22.02.2023
(73) Titulaire: VALEO SYSTEMES THERMIQUES, 78320 Le Mesnil Saint-Denis (FR)
(72) Inventeur: PIERRES, Philippe, 78322 Le Mesnil-Saint-Denis Cedex (FR); BARBIER, Thierry, 78322 Le Mesnil-Saint-Denis Cedex (FR); MENIN, Philippe, 78322 Le Mesnil-Saint-Denis Cedex (FR); VARELA SANTOYO, Nestor Ismael, 78322 Le Mesnil-Saint-Denis Cedex (FR)
(74) Mandataire: Valeo Powertrain Systems
(86) Numéro de dépôt international: PCT/EP2021/059486
(87) Numéro de publication internationale: WO 2021/209409

(56) Documents cités:
- WO-A1-2016/125731
- WO-A1-2018/139033
- WO-A1-2019/044302
- DE-B4- 112014 004 822

## Description

La présente invention concerne un dispositif de chauffage, ventilation et/ou climatisation pour véhicule automobile ainsi que sur un véhicule automobile comprenant un tel dispositif de chauffage, ventilation et/ou climatisation.

Un véhicule automobile est couramment équipé d'un dispositif de ventilation, de chauffage et/ou de climatisation pour réguler les paramètres aérothermiques d'un flux d'air distribué vers l'intérieur de l'habitacle du véhicule. Le dispositif comprend généralement un boîtier délimité par des cloisons dans lesquelles sont ménagées des ouvertures, dont au moins une entrée d'air et au moins une sortie d'air.

De façon connue, le boîtier loge un pulseur pour faire circuler le flux d'air depuis l'entrée d'air vers la sortie d'air. Le boîtier loge aussi des moyens de traitement thermique pour réchauffer et/ou refroidir le flux d'air préalablement à sa distribution à l'intérieur de l'habitacle. A titre d'exemple, les moyens de traitement thermique peuvent comprendre un évaporateur qui est destiné à refroidir et déshumidifier le flux d'air le traversant, ainsi qu'un radiateur, éventuellement associé à un radiateur additionnel, qui est destiné à réchauffer le flux d'air qui le traverse.

Le dispositif de chauffage, ventilation et/ou climatisation, également connu sous sa dénomination anglaise HVAC (pour Heating, Ventilation and Air-Conditioning) peut être alimenté soit en air extérieur au véhicule (également appelé air frais), soit en air de recyclage, c'est-à-dire issu de l'habitacle du véhicule. De façon connue, un pulseur est mis en œuvre pour faire circuler le flux d'air. Il peut s'agir du flux d'air frais ou neuf provenant de l'extérieur du véhicule ou du flux d'air de recyclage provenant de l'habitacle du véhicule ou encore d'un mélange des flux d'air extérieur et recyclé.

Il est important de pouvoir dissocier les flux d'air (air extérieur - air de recyclage), en particulier lors du passage, des flux d'air au travers du dispositif de chauffage, ventilation et/ou climatisation, en fonction des besoins des occupants du véhicule, ou en d'autres termes lors du conditionnement thermique des flux d'air.

En effet, l'air de recyclage étant déjà à une température proche de la température de consigne à atteindre, il est ainsi possible d'atteindre rapidement la température souhaitée par l'utilisateur. Toutefois, l'air de recyclage est plus chargé en humidité que l'air provenant de l'extérieur du véhicule, si bien que si l'air de recyclage est dirigé à proximité du pare-brise par l'intermédiaire de bouches d'aération, situées en avant du conducteur ou du passager avant, par exemple, ou directement sur le pare-brise, l'humidité comprise dans l'air de recyclage se condense sur le pare-brise et crée de la buée.

La sortie comprend plusieurs conduits distribuant les flux d'air vers des buses débouchant dans différentes zones de l'habitacle avec notamment la sortie dégivrage menant le flux d'air vers la buse de dégivrage permettant de désembuer le pare-brise, le conduit ventilation amenant le flux d'air vers la buse de ventilation latéraux/centraux permettant de refroidir/réchauffer les passagers du véhicule, ainsi que le conduit pieds orientant le flux d'air vers la buse pied permettant de refroidir/réchauffer les pieds des passagers avant/arrière du véhicule. Il peut aussi y avoir un conduit dédié aux passagers arrière du véhicule.

Une solution connue, comme celle du document WO 2019/044302 A1, consiste à conditionner thermiquement le flux d'air extérieur et à l'envoyer dans l'habitacle à proximité du pare-brise ou directement sur celui-ci, et à conditionner thermiquement le flux d'air de recyclage pour l'envoyer dans l'habitacle à distance du pare-brise, au niveau des autres bouches d'aération, telles que des sorties de bouches d'aération situées au niveau des pieds du conducteur ou passager avant. Il s'agit d'un mode de fonctionnement double nappe appelé « double layer » en anglais.

Toutefois on observe dans ces dispositifs connus qu'une trop grande quantité d'air chaud ayant traversé le radiateur, est orienté en direction de la sortie ventilation résultant en ce que la température du flux d'air pour la sortie pieds est égale à la température du flux d'air pour la sortie ventilation. Il en résulte une diminution du confort thermique où généralement il est préférable d'avoir une température pour les pieds plus élevée que pour la ventilation.

Le but de l'invention est de remédier à cet inconvénient.
Pour cela l'invention propose un dispositif de chauffage, ventilation et/ou climatisation pour véhicule automobile comprenant un boitier, le dit boitier comprenant:
- un premier conduit d'écoulement pour un premier flux d'air ;
- un deuxième conduit d'écoulement pour un deuxième flux d'air ;
- une cloison de séparation étant agencée au sein du boitier de manière à séparer le premier conduit d'écoulement du deuxième conduit d'écoulement ;
- un premier échangeur de chaleur agencé dans le premier conduit d'écoulement et dans le deuxième conduit d'écoulement, ledit échangeur de chaleur étant commun aux deux conduits d'écoulement ;
- un deuxième échangeur de chaleur agencé en aval, par rapport à l'écoulement d'un flux d'air, du premier échangeur de chaleur et agencé au sein du deuxième conduit d'écoulement ;
- un premier volet agencé en aval du deuxième échangeur de chaleur;

le premier volet pouvant pivoter entre deux positions extrêmes, une première position extrême où ledit volet vient en butée contre la cloison de séparation et/ou le deuxième échangeur de chaleur et une deuxième position extrême où ledit volet vient en appui contre une paroi du boîtier ;
caractérisé en ce que le boîtier comprend une paroi de guidage d'un flux d'air agencée au sein du premier conduit d'écoulement en aval du premier échangeur de chaleur et orientant le premier flux d'air en direction du premier volet ;
et en ce que le boitier comprend un espace entre la paroi de guidage d'un flux d'air et le premier volet de manière à ce que le premier volet n'est pas apte à venir en butée contre la paroi de guidage d'un flux d'air,
et dans lequel le premier volet pivote dans une position intermédiaire située entre les deux positions extrêmes avec la paroi de guidage d'un flux d'air s'étendant dans une direction et le premier volet comprenant une porte s'étendant dans une direction; dans ladite position intermédiaire ladite porte étant dans le prolongement de la paroi de guidage d'un flux d'air.

L'invention permet ainsi de garantir un guidage du flux d'air en direction du volet qui est apte à orienter le flux d'air en direction de la sortie pieds. Toutefois l'espace crée entre la paroi de guidage d'un flux d'air et le volet permet de conserver les modes de fonctionnement usuel et d'alimenter en air chaud les sorties ventilation et/ou dégivrage tout en alimentant en air chaud la sortie pieds.

Préférentiellement, le dispositif comprend un troisième échangeur de chaleur agencé en amont du premier échangeur de chaleur par rapport à l'écoulement d'un flux d'air, le troisième échangeur de chaleur étant agencé dans le premier conduit d'écoulement et dans le deuxième conduit d'écoulement, ledit échangeur de chaleur étant commun aux deux conduits d'écoulement.

Préférentiellement, dans ladite position intermédiaire l'espace entre l'extrémité de la paroi de guidage d'un flux d'air et l'extrémité du premier volet est compris entre 5 et 25 mm, de préférence entre 10 et 15 mm.

Préférentiellement, le premier volet est apte à obturer une bouche d'entrée d'un conduit de sortie lorsque ledit volet est positionné dans la deuxième position extrême.

Préférentiellement, le premier conduit d'écoulement d'un flux d'air et le deuxième conduit d'écoulement d'un flux d'air comprennent chacun un chemin de contournement du premier échangeur de chaleur, les chemins de contournement étant agencés de part et d'autre du premier échangeur de chaleur.

Préférentiellement, un deuxième volet, notamment un volet de type papillon, est agencé au sein du premier conduit d'écoulement d'un flux d'air et un troisième volet, notamment de type porte coulissante, est agencé au sein du deuxième conduit d'écoulement d'un flux d'air, lesdits volets étant agencés entre le premier et troisième échangeur de chaleur de manière à orienter chaque flux d'air respectifs à travers le chemin de contournement correspondant et/ou à travers le premier échangeur de chaleur.

Préférentiellement, le premier conduit d'écoulement d'un flux d'air comprend en outre un quatrième volet, notamment de type papillon, agencé au sein du chemin de contournement correspondant.

Préférentiellement, le boitier comprend un élément écran agencée à une extrémité du volet, ledit élément écran étant de forme complémentaire à la course du volet et s'étendant au moins en partie sur une partie de la course du volet.

Préférentiellement, le volet est de type papillon et l'élément écran est agencé dans la partie amont, par rapport à l'écoulement d'un flux d'air, du boitier par rapport au volet.

Préférentiellement, le boitier comprend un deuxième élément écran agencé à l'autre extrémité du volet.

Préférentiellement, le premier élément écran s'étend sur au moins 10% de la course du volet, de préférence entre 20% et 50% de la course du volet.

Préférentiellement, le deuxième élément écran s'étend sur au moins 5% de la course du volet, de préférence entre 10% et 30% de la course du volet.

L'invention porte également sur un véhicule automobile comprenant un dispositif de chauffage, ventilation et/ou climatisation tel que décrit ci-dessus, dans lequel le conduit correspond à la sortie pieds et est configuré pour alimenter en air la zone pieds de l'habitacle.

Il est entendu que l'ensemble des caractéristiques et configurations précédemment ne sont en rien limitatives. D'autres caractéristiques, détails et avantages de l'invention ressortiront plus clairement à la lecture de la description détaillée donnée ci-après, et de plusieurs exemples de réalisation donnés à titre indicatif et non limitatif en référence aux dessins schématiques annexés, sur lesquels :
La figure 1 [Fig. 1] illustre une coupe selon une vue de profile du dispositif de chauffage, ventilation et/ou climatisation selon l'invention selon un mode de fonctionnement ;
La figure 2 [Fig. 2] illustre un plan détaillé de la figure 1 du dispositif selon un autre mode de fonctionnement ;
La figure 3 [Fig. 3] illustre, en vue schématique de profil, d'une autre partie du dispositif de chauffage, ventilation et/ou climatisation ;
La figure 4 [Fig. 4] illustre une vue en perspective d'une autre partie du dispositif de chauffage, ventilation et/ou climatisation ;

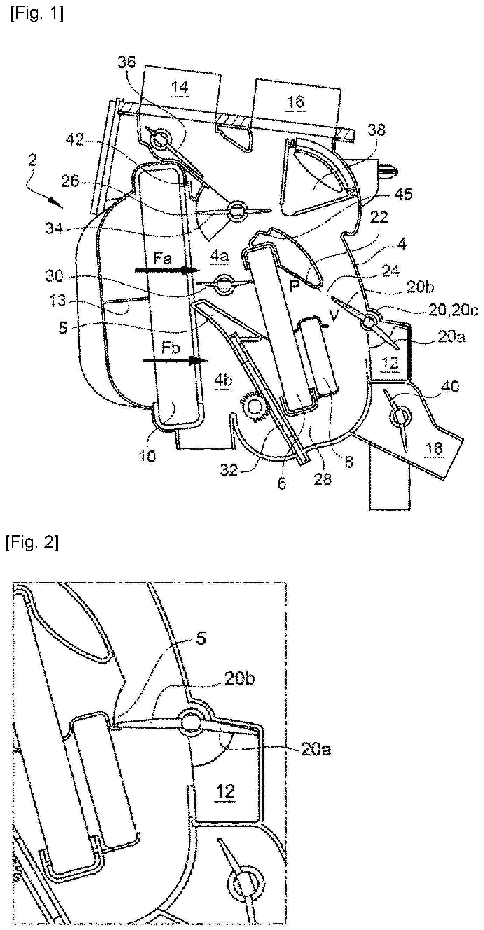

La figure 1 illustre un dispositif 2 de chauffage, ventilation et/ou climatisation selon l'invention comprenant un boîtier 4 dans lequel sont logés des moyens de traitement thermique du flux d'air destiné à être distribué dans l'habitacle. Le boitier 4 comprend un premier conduit d'écoulement 4a pour un premier flux d'air Fa, et un deuxième conduit d'écoulement 4b pour un deuxième flux d'air Fb.

Selon l'invention, le boitier 4 comprend une cloison de séparation 5 étant agencée au sein du boitier 4 de manière à séparer le premier conduit d'écoulement 4a du deuxième conduit d'écoulement 4b.

Les moyens de traitement thermique comprennent un premier échangeur de chaleur 6, par exemple un radiateur, destiné à réchauffer une partie du flux d'air circulant dans le dispositif 2 de chauffage, ventilation et/ou climatisation. Le premier échangeur de chaleur 6 est agencé dans le premier conduit d'écoulement 4a et dans le deuxième conduit d'écoulement 4b, ledit échangeur de chaleur 6 étant commun aux deux conduits d'écoulement 4,4b.

Les moyens de traitement thermique peuvent comprendre en outre un deuxième échangeur 8, correspondant à un radiateur électrique destiné à réchauffer le flux d'air de manière plus rapide, notamment dans le cas d'un démarrage du véhicule. Le deuxième échangeur de chaleur 8 est agencé en aval par rapport au flux d'air du premier échangeur de chaleur 6. Le deuxième échangeur de chaleur est agencé au sein du deuxième conduit d'écoulement 4b.

Les moyens de traitement thermique comprennent également un troisième échangeur de chaleur 10, par exemple un évaporateur, agencé en amont du premier échangeur de chaleur 6 par rapport à la direction de l'écoulement des flux d'air. Le troisième échangeur de chaleur 10 est destiné à refroidir et déshumidifier l'intégralité du flux d'air circulant dans le dispositif de chauffage. Le troisième échangeur de chaleur 10 est agencé dans le premier conduit d'écoulement 4a et dans le deuxième conduit d'écoulement 4b, ledit échangeur de chaleur 10 étant commun aux deux conduits d'écoulement 4,4b.

Le flux d'air est introduit dans le boîtier 4 par une entrée (non illustrée) puis est dirigé vers une sortie, après avoir été traité thermiquement par les échangeurs de chaleur 6, 8, 10 par l'intermédiaire d'un pulseur (non illustré).

La sortie comprend plusieurs conduits distribuant les flux d'air vers des buses débouchant dans différentes zones de l'habitacle. La sortie comprend notamment un premier conduit de sortie 12 orientant le flux d'air vers la buse pied permettant de réchauffer les pieds des passagers avant et éventuellement arrière du véhicule. La sortie comprend aussi un deuxième conduit de sortie 14 véhiculant le flux d'air vers la buse de dégivrage permettant de désembuer le pare-brise. La sortie comprend un troisième conduit de sortie16 menant le flux d'air vers la buse de ventilation latéraux/centraux permettant de refroidir/réchauffer les passagers avant du véhicule. La sortie peut aussi comprendre un quatrième conduit de sortie 18 pour guider le flux d'air vers la zone arrière du véhicule permettant de refroidir/réchauffer les passagers arrière du véhicule. Chaque conduit de sortie comprend une bouche d'accès pouvant être obturée au moins partiellement par un volet d'obturation.

Selon l'invention, le dispositif comprend un premier volet 20 agencé en aval du deuxième échangeur de chaleur 8 et venant en butée dans une position extrême contre la cloison de séparation 5 ou contre le deuxième échangeur de chaleur 8. Comme illustré sur la [Fig.1], le premier volet 20 est de type papillon, à savoir qu'il comprend un axe de rotation agencé au centre d'une porte ou un axe de rotation agencé entre deux portes. Le premier volet 20 est agencé au niveau du premier conduit de sortie 12. Autrement dit, le premier volet 20 est agencé de manière à ce qu'il puisse obturer au moins partiellement la bouche d'entrée du premier conduit de sortie 12. Comme illustré sur la figure 1, le premier volet 20 est de type papillon avec un axe de rotation 20c agencé entre deux portes 20a,20b qui sont ici inscrites dans deux plans distincts. Bien évidemment les deux portes peuvent être inscrites dans un même plan. Une première porte 20a est apte à obturer ou libérer l'accès au premier conduit de sortie 12. La deuxième porte 20b permet de guider le flux d'air sortant du premier ou deuxième échangeur de chaleur 6,8.

Le premier volet 20 pivote entre deux positions extrêmes, une première position extrême où le premier volet 20, et plus précisément la deuxième porte 20b, vient en butée contre la cloison de séparation 5 et/ou le deuxième échangeur de chaleur 8 et une deuxième position extrême où le premier volet 20, et plus précisément la deuxième porte 20b, vient en butée contre une paroi du boitier 4. Bien évidemment, le premier volet 20 est apte à adopter toute position intermédiaire entre ces deux positions extrêmes.

Dans la première position extrême telle qu'illustrée en figure 2, le premier volet 20, et notamment la deuxième porte 20b vient en butée contre la cloison de séparation 5 tandis que la première porte 20a vient en butée contre une paroi du boitier 4, notamment une paroi du premier conduit de sortie 12 de façon à ce que le débit d'air pouvant circuler au sein du premier conduit de sortie 12 soit maximal.

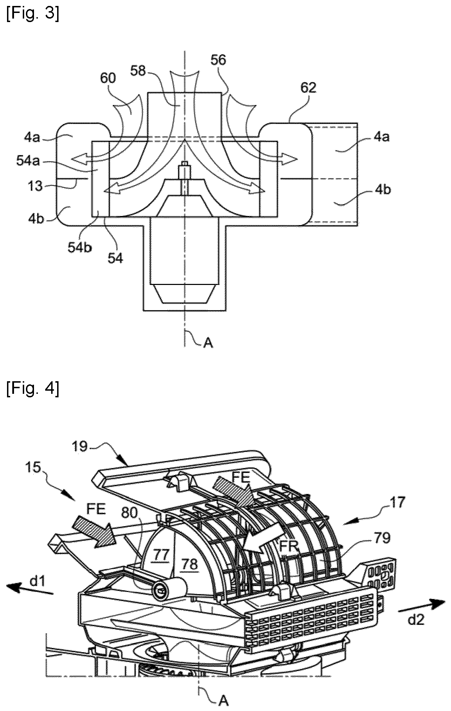

Dans la deuxième position extrême illustrée en figure 3, le premier volet 20, et notamment la deuxième porte 20b vient en butée contre une paroi du boitier 4 et tandis que la première porte 20a obture intégralement le premier conduit de sortie 12 de façon à ce qu'un flux d'air ne puisse pas circuler au sein du premier conduit de sortie 12.

Selon l'invention, le dispositif de chauffage, ventilation et/ou climatisation comprend en outre une paroi de guidage 22 d'un flux d'air agencée dans le premier conduit d'écoulement 4a d'un flux d'air Fa et agencée en aval, par rapport à l'écoulement d'un flux d'air, du premier échangeur de chaleur 6. La paroi de guidage 22 d'un flux d'air oriente le premier flux d'air Fa en direction du premier volet 20.

Ainsi selon l'invention le premier flux d'air Fa chaud ayant traversé le premier échangeur de chaleur 6, est orienté en direction du premier volet 20 et donc vers le premier conduit de sortie 12 vers la zone des pieds dans l'habitacle.

De par cette orientation, la majorité du débit du premier flux d'air Fa réchauffé est orienté en direction du conduit de sortie 12 pieds.

Toutefois, selon l'invention, la majorité mais pas l'intégralité du débit du premier flux d'air Fa réchauffé est orienté en direction du conduit de sortie 12 pieds. En effet, il y a toujours une partie du premier flux d'air Fa qui peut s'écouler en direction du deuxième et/ou troisième conduit de sortie 14,16.

Pour cela, le boitier 4, comprend un espace 24, ou un interstice, entre la paroi de guidage 22 d'un flux d'air et le premier volet 20 de manière à ce que le premier volet 20 n'est pas apte à venir en butée contre la paroi de guidage 22 d'un flux d'air. Autrement dit, selon l'invention, le premier volet 20 est configuré de sorte que le premier volet 20 ne peut pas venir en appui pour la paroi de guidage 22 d'un flux d'air.

Comme vu précédemment, le premier volet 20 pivote dans une position intermédiaire I telle qu'illustrée en figure 1 située entre les deux positions extrêmes. La paroi de guidage 22 d'un flux d'air s'étend sensiblement dans une direction P et le premier volet et notamment la deuxième porte 20b s'étend sensiblement dans une direction V. Comme illustré en figure 1, les directions P et V sont sensiblement alignées dans cette position intermédiaire. Autrement dit, la deuxième porte 20b est dans le prolongement de la paroi de guidage 22 d'un flux d'air, tout en conservant un espace 24 entre les deux éléments.

Dans ladite position intermédiaire, l'espace 24 entre l'extrémité de la paroi de guidage 22 d'un flux d'air et l'extrémité du premier volet 20 et notamment l'extrémité de la deuxième porte 20b est compris entre 5 et 25 mm, de préférence entre 10 et 15 mm.

Ainsi, de par cet interstice 24, on garantit qu'une partie du premier flux d'air Fa ayant traversé le premier échangeur de chaleur 6 puisse toujours être véhiculé en direction du deuxième et/ou troisième conduit de sortie 14,16.

Le premier conduit d'écoulement 4a du premier flux d'air Fa et le deuxième conduit d'écoulement 4b du deuxième flux d'air Fb comprennent chacun un chemin de contournement 26,28 du premier échangeur de chaleur 6, les chemins de contournement 26,28 étant agencés de part et d'autre du premier échangeur de chaleur 6.

Un deuxième volet 30 de type papillon est agencé au sein du premier conduit d'écoulement 4a du premier flux d'air Fa et un troisième volet 32 de type porte coulissante est agencé au sein du deuxième conduit d'écoulement 4b du deuxième flux d'air Fb, lesdits volets étant agencés entre le premier 6 et troisième 10 échangeur de chaleur de manière à orienter chaque flux d'air Fa,Fb respectif à travers le chemin de contournement 26,28 correspondant et/ou à travers le premier échangeur de chaleur 6.

Autrement dit, le deuxième volet 30 de type papillon pivote entre deux positions extrêmes et peut adopter toute position intermédiaire, une première position extrême où le deuxième volet 30 obture intégralement le passage du flux d'air Fa pour accéder au premier échangeur de chaleur 6, et une deuxième position extrême où le deuxième volet 30 libère au maximum le passage du flux d'air Fa pour accéder au premier échangeur de chaleur 6. Le premier conduit d'écoulement 4a du premier flux d'air Fa comprend en outre un autre volet, donc un quatrième volet 34 aussi de type papillon agencé au sein du chemin de contournement 26 du premier échangeur de chaleur 6 correspondant. Le quatrième volet 34 pivote entre deux positions extrêmes et peut adopter toute position intermédiaire, une première position extrême où le quatrième volet 34 obture intégralement le chemin de contournement 26 du premier échangeur de chaleur 6 et une deuxième position extrême où le quatrième volet 34 s'oppose au moins à l'écoulement du premier flux d'air Fa au sein du chemin de contournement 26.

Le troisième volet 32 de type porte coulissante coulisse entre deux positions extrêmes et peut adopter toute position intermédiaire, une première position extrême où le troisième volet 32 obture intégralement le passage du flux d'air Fa pour accéder au premier échangeur de chaleur 6 et une deuxième position extrême où le troisième volet 32 obture intégralement le chemin de contournement 28 correspondant.

Bien évidemment, l'invention n'est pas limitée au type de volet pour le premier, deuxième, troisième ou quatrième volet 20, 30, 32, 34. Chaque volet peut correspondre à un volet papillon, tambour, drapeau (axe de rotation agencé à une extrémité d'une porte).

Comme expliqué précédemment, chaque conduit de sortie 12,14,16,18 comprend un volet d'obturation associé qui permet à chaque flux d'air Fa,Fb de s'écouler ou non au sein du conduit de sortie.

Le premier volet 20 est associé au premier conduit de sortie 12. Un cinquième volet 36 ici de type drapeau est associé au deuxième conduit de sortie 14 orientant l'air vers la buse de dégivrage à proximité du pare-brise du véhicule. Le cinquième volet 36 est apte à obturer intégralement le deuxième conduit de sortie 14. Un sixième volet 38 ici de type tambour est associé au troisième conduit de sortie 16 orientant l'air vers la buse de ventilation centrale/latérale. Le sixième volet 38 est tel qu'il n'est pas apte à obturer intégralement le troisième conduit de sortie 16. En effet, le sixième volet 38 comprend échancrures (non illustrées) sur ces cotés latéraux de manière à toujours garantir une fuite d'air de l'ordre de 10% du débit maximal même lorsque le sixième volet 38 est en position extrême d'obturation du troisième conduit de sortie 16. En outre un septième volet 40, ici de type papillon, associé au quatrième conduit de sortie 18 orientant l'air vers la buse de ventilation des passagers à l'arrière du véhicule. Le septième volet 40 est apte à obturer intégralement le quatrième conduit de sortie 18.

La structure du sixième volet 38 permet de garantir qu'un flux d'air puisse toujours être orienté en direction des vitres latérales du véhicule et permettre un dégivrage ou désembuement de celles-ci. Ceci est avantageux notamment dans le mode dégivrage (cf. [0062]), où le sixième volet 38 ventilation est en position extrême d'obturation mais les vitres du véhicule peuvent toujours être dégivrées ou désembuées.

On appelle les premier, cinquième, sixième et septième volets les volets de distribution et les deuxième, troisième et quatrième volets les volets de mixage.

Le dispositif 2 selon l'invention peut comprendre un mécanisme de synchronisation des volets où le septième volet 40 peut être lié en rotation avec le sixième volet 38 par exemple par l'intermédiaire d'une bielle.

Un tel agencement du dispositif 2 de chauffage, ventilation et/ou climatisation selon l'invention permet d'exploiter plusieurs modes de fonctionnement tels que décrit ci-dessous. On ne décrira que les volets de distributions, les volets de mixage dépendant des consignes de températures indiqués par les passagers avant et/ou arrière.

Mode Pieds : Dans le mode pieds, comme illustré en figure 2, le premier volet est en position d'ouverture du premier de conduit de sortie 12, autrement dit, le premier volet 20 est en butée contre la paroi de séparation 5 et/ou contre le deuxième échangeur de chaleur 8. Le cinquième volet 36 est en position d'obturation partielle (fermé à 80%), le sixième volet 38 est en position d'obturation du troisième conduit de sortie 16, avec des fuites d'air représentant jusqu'à 10% du débit maximal et le septième volet est en position d'obturation intégrale du quatrième conduit de sortie 18.

Mode bi-level : dans ce mode, le premier volet 20 est en position intermédiaire I où la deuxième porte 20b est dans le prolongement de la paroi de guidage 22 du premier flux d'air Fa réchauffé, comme illustré en figure 1. Le cinquième volet 36 est en position d'obturation du deuxième conduit de sortie 14 et le sixième 38 et septième 40 volets sont en position d'ouverture intermédiaire, c'est-à-dire entre la position d'obturation et la position d'ouverture de chaque conduit de sortie 16,18 correspondant, bien que le sixième volet 38 puisse être en position d'ouverture complète.

Mode Pieds/dégi : dans ce mode, le premier 20 et cinquième 36 volets sont en position intermédiaire et le sixième 38 et septième 40 volets sont en position d'obturation de chaque conduit de sortie 16,18 correspondant, avec les fuites d'air pour le sixième volet 38.

Mode Ventilation : les sixième 38 et septième 40 volets sont en position d'ouverture de chaque conduit de sortie 16,18 correspondant et le premier 20 et cinquième 36 volets sont en position d'obturation de chaque conduit de sortie 12,14 correspondant

Mode Dégivrage : Seul le cinquième volet 36 est en position d'ouverture du conduit de sortie 14, les autres volets de distribution sont en position d'obturation de chaque conduit correspondant.

Le tableau suivant résume les différents modes. Pour chaque mode, pieds, dégivrage, *etc.* On y retrouve deux lignes, la première ligne correspond au degré d'ouverture (pourcentage) du volet indiqué, avec 100 correspondant au degré d'ouverture maximale, autrement dit la position extrêmale où le volet s'oppose le moins à l'écoulement d'un flux d'air et 0 correspondant au degré d'obturation du conduit correspondant. sont inscrits à gauche et les volets sont écrits selon leurs degré d'ouverture et débit passant à travers ces volets. La deuxième ligne correspond au débit d'air circulant au sein du conduit d'air correspondant (pourcentage par rapport au débit d'air total).

| Mode | Ouverture premier volet (20) | Ouverture cinquième volet (36) | Ouverture sixième/septième volet (38,40) |
|---|---|---|---|
| | Débit d'air dans premier conduit de sortie (12) (%) | Débit d'air dans deuxième conduit de sortie (14) (%) | Débit d'air dans troisième et/ou quatrième conduit de sortie (16,18) (%) |
| Pieds | 100 | 15/20 | 0 |
| | 70/60 | 20 | 10/20 |
| Bi-Level | ~50 | 0 | -100 |
| | 60 | 0 | 40 |
| Pieds/Dégivrage | -100 | -100 | 0 |
| | 45/40 | 45/40 | 10/20 |
| Ventilation | 0 | 0 | 100 |
| | 0 | 0 | 100 |
| Dégivrage | 0 | 100 | 0 |
| | 0 | 90/80 | 10/20 |

Ainsi il est possible selon l'invention d'avoir plusieurs modes de fonctionnement et d'avoir plus d'air chaud en direction des pieds.

La figure 3 illustre le boitier d'entrée d'air le dispositif comprendre un boîtier d'entrée d'air et un pulseur (ou groupe moto-ventilateur (GMV) ou encore blower), à savoir avec une unique turbine, en d'autres termes une roue à ailettes, 54 apte à être entraînée en rotation autour d'un axe A. Le dispositif 2 comprend un organe tubulaire 56 apte à délimiter un premier canal de circulation d'air 58 permettant l'écoulement d'un premier flux d'air destiné à traverser une première partie axiale de la turbine 54b et un deuxième canal de circulation d'air 60 permettant l'écoulement d'un deuxième flux d'air destiné à traverser une deuxième partie axiale de la turbine 54a. L'organe tubulaire 56 est monté à l'endroit d'une première extrémité de ladite turbine 54 et délimite un espace, ou volume, interne formant au moins une partie du premier canal de circulation d'air 58, le deuxième canal de circulation d'air 60 s'étendant à l'extérieur de l'organe tubulaire 56. Le dispositif 2 comprend en outre un boîtier d'entrée d'air recouvrant la première extrémité de la turbine 54 et l'organe tubulaire 56. Le boîtier d'entrée d'air comprend des moyens de guidage aptes à diriger un premier flux d'air dans le premier canal de circulation d'air 58, et à diriger un deuxième flux d'air dans le deuxième canal de circulation d'air 60. Les parties axiales de la turbine 54a,54b peuvent par exemple être faite en référence à l'axe vertical du véhicule, lorsque le dispositif est installé dans le véhicule.

Pour cela, le boîtier d'entrée d'air peut par exemple comprendre une première et deuxième bouches d'entrée d'air, une pour l'air de recyclage et une pour l'air frais, et trois volets tambour ayant des axes de rotation coaxiaux. Le volet tambour central est agencé pour permettre la communication aéraulique entre les entrées d'air et le premier canal de circulation d'air 58. Les deux tambours latéraux sont agencés pour permettre la communication aéraulique entre les bouches d'entrées d'air et le deuxième canal de circulation d'air 60. Le boîtier d'entrée d'air 14 peut comporter en outre un filtre à air destiné à être traversé par le premier et le deuxième flux d'air.

La turbine 54 est agencée dans une volute 62 dont la sortie comprend les deux conduits d'écoulement 4a,4b séparé par la paroi de séparation 13 correspondant à une partie de la cloison de séparation 5. Autrement dit, le premier canal de circulation d'air 58 oriente le flux d'air vers une première partie axiale de la turbine 54b et débouche ainsi dans le deuxième conduit d'écoulement 4b, tandis que le deuxième canal de circulation d'air 60 oriente le flux d'air vers la deuxième partie axiale 54a de la turbine 54 et débouche ainsi dans le premier conduit d'écoulement 4a.

Le pulseur d'air, c'est-à-dire la ou les roues à ailettes 54 est contenu dans une partie du boîtier en forme de spirale, communément appelé volute 62. Les flux d'air aspirés par la ou les roues à ailettes 54 sont orientés vers les parois de la volute 62 et épousent ainsi la trajectoire circulaire définie par ces parois. La volute 62 présente ensuite une sortie de volute ayant la forme d'un conduit rectiligne de manière à ce que les flux d'air sortant de la volute 62 suivent cette même direction.

La partie du boîtier 4 positionnée entre la sortie de la volute 62 et la distribution est communément appelée le divergent. Le divergent correspond à un canal dans lequel le flux d'air sortant de la volute 62 est acheminé jusqu'au troisième échangeur de chaleur 10, ici l'évaporateur 10.

Le dispositif 2 comprend une cloison de séparation 5 séparant, ou délimitant, les deux conduits d'écoulement 4a,4b l'un de l'autre. Cette cloison de séparation peut être en une pièce et s'étendre au sein du dispositif 2 de chauffage, ventilation et/ou climatisation avec des orifices pour permettre l'introduction des différents échangeurs de chaleur 6,8,10 ou la cloison de séparation peut être en plusieurs parties, ou modules. Il peut y avoir une première partie 13 s'étendant entre le pulseur et l'évaporateur 10, une deuxième partie 5 s'étendant entre le troisième 10 et le premier 6 échangeur de chaleur, une troisième s'étendant au-dessus du deuxième échangeur de chaleur 8.

La cloison de séparation 5 selon l'invention ne se limite pas à une forme particulière. La cloison de séparation correspond à un élément permettant de séparer ou délimiter les deux conduits d'écoulement 4a,4b. Telle qu'illustré en figures 1 et 3, la première partie correspond à une paroi plane. La deuxième partie, correspond ici à un bloc, c'est-à-dire un ensemble de parois définissant une forme non-plane ou accidentée, avec des éléments de butée contre lesquels le deuxième volet 30, de mixage, peut venir en appui ou entre des logements pour accueillir au moins partiellement le troisième volet 32, de mixage. La troisième partie correspond à une paroi en Oméga avec un logement pour accueillir le deuxième échangeur de chaleur 8 et un élément de butée contre lequel vient en appui le premier volet 20, et notamment la deuxième porte 20b.

Le dispositif 2 peut comprendre un boîtier d'entrée d'air 19 comme illustré en figure 4. Ici le boîtier d'entrée d'air 19 comporte au moins deux entrées d'air 15,17 distinctes et s'étendant sur une largeur (d2) du boîtier d'entrée d'air, et des organes de guidage d'air 77, 78, 79 configurés pour diriger au moins un flux d'air destiné à être admis dans le boîtier d'entrée d'air 19.

Les organes de guidage d'air comportent au moins trois volets 77, 78, 79 coaxiaux, dont un volet central 77 et deux volets latéraux 78, 79 agencés de part et d'autre du volet central 77, lesdits volets coaxiaux 77, 78, 79 sont agencés entre lesdites deux bouches entrées d'air 15,17 distinctes du boîtier d'entrée d'air 19, de façon mobile autour d'un unique axe de pivotement 80. Le volet central 77 s'étend sur une portion de ladite largeur du boitier d'entrée d'air 19 supérieure ou égale à la portion de la largueur où s'étendent les deux volets latéraux 78,79.

Lesdits volets coaxiaux 77,78,79 sont de type tambour et sont chacun agencés mobiles entre une première position extrême, dans laquelle ledit volet 77,78,79 obture une première entrée d'air 15, et une deuxième position extrême, dans laquelle ledit volet 77,78,79 obture la deuxième entrée d'air 17.

Dans le mode désembuage, le volet central 77 doit dans la première position extrême d'obturation de la deuxième entrée d'air 17. Les volets latéraux 78,79 doivent être dans la deuxième position extrême d'obturation de la première entrée d'air 15.

De la sorte, le flux d'air frais FE peut s'écouler au sein du pulseur à travers la première entrée d'air 15 pour être guidé vers l'intérieur de l'organe tubulaire 56 et aboutir au niveau de la première partie axiale de la turbine 54b et déboucher ainsi au sein du deuxième conduit d'écoulement 4b, et le flux d'air de recyclage FR peut également s'écouler dans le pulseur à travers les volets latéraux 78,79 qui guident le flux d'air de recyclage FR en direction de l'extérieur de l'organe tubulaire 56 pour aboutir au niveau de la deuxième partie axiale de la turbine 54a et déboucher ainsi au sein du premier conduit d'écoulement 4a.

En outre, le boitier 4 comprend un élément écran 42 agencé à une extrémité du quatrième volet 34. Ledit élément écran 42, couramment appelé nez de progressivité, est de forme complémentaire à la course du quatrième volet 34 et s'étend au moins en partie sur une partie de la course du volet. En d'autres termes, le boîtier 4 comprend un élément écran 42, ou un masque, qui épouse la trajectoire curviligne du quatrième volet 34. On peut aussi dire que l'élément écran 42 est au moins partiellement concave avec le quatrième volet se déplaçant au sein de la partie concave. En effet, le quatrième volet 34 correspond à un volet papillon pivotant autour d'un axe de rotation agencée entre deux portes ou au centre d'une seule porte, si bien que la porte ou les portes adoptent une trajectoire circulaire et pivotent d'une position extrême où elles viennent en butée contre le boitier 4 pour empêcher l'écoulement du flux d'air à travers le chemin de contournement26 à une autre position extrême où elles s'opposent le moins à l'écoulement du flux d'air.

En ouvrant, ou pivotant de quelques degrés, le quatrième volet 34, cela crée un appel d'air où l'air froid est aspiré vers la distribution ce qui ne favorise pas un bon mélange avec l'air chaud, il en résulte que la sortie dégivrage ou la sortie aération est plus froid que la température de consignée donnée par les occupants du véhicule.

L'élément écran 42 donc de permet de générer une zone morte afin de mieux calibrer la quantité d'air froid pour la progressivité en température.

Le quatrième volet 34 est de type papillon et l'élément écran 42 est agencé dans la partie amont, par rapport à l'écoulement d'un flux d'air, du boitier 4 par rapport au quatrième volet 34. Autrement dit, l'élément écran 42 est agencé entre le quatrième volet 34 et le troisième échangeur de chaleur 10, par rapport à l'écoulement d'un flux d'air.

Le boitier 4 comprend un deuxième élément écran 45 agencé à l'autre extrémité du volet 34. De la même manière, le deuxième élément écran est de forme complémentaire à la trajectoire de la porte du volet, autrement dit au moins partiellement concave, de manière à aussi générer une zone morte.

Comme illustrée sur la figure 1, le deuxième élément écran 45 est formée par un ensemble de parois unies ou monobloc qui forment aussi en outre la paroi de guidage 22.

Le premier élément écran 42 s'étend sur au moins 10% de la course du volet, de préférence entre 20% et 50% de la course du volet. Autrement dit, si le quatrième volet 34 pivote dans une gamme d'angle compris entre [0°,100°], dans ce cas, la partie concave de l'élément écran 42 s'étend au moins dans la gamme d'angle compris entre ]0°,10°], de préférence entre ]0°, 20°] voire jusqu'à une gamme d'angle compris entre ]0°,50°] et toutes valeurs intermédiaires.

Le deuxième élément écran 45 s'étend sur au moins 5% de la course du volet, de préférence entre 10% et 30% de la course du volet. Autrement dit la partie concave du deuxième élément écran 45 s'étend au moins dans la gamme d'angle compris entre ]0°,10°], de préférence entre ]0°, 10°] voire jusqu'à une gamme d'angle compris entre ]0°,30°] et toutes valeurs intermédiaires.

## Revendications

1. Dispositif (2) de chauffage, ventilation et/ou climatisation pour véhicule automobile comprenant un boitier (4), le dit boitier (4) comprenant:
- un premier conduit d'écoulement (4a) pour un premier flux d'air (Fa) ;
- un deuxième conduit d'écoulement (4b) pour un deuxième flux d'air (Fb) ;
- une cloison de séparation (5,13) étant agencée au sein du boitier (4) de manière à séparer le premier conduit d'écoulement (4a) du deuxième conduit d'écoulement (4b) ;
- un premier échangeur de chaleur (6) agencé dans le premier conduit d'écoulement (4a) et dans le deuxième conduit d'écoulement (4b), ledit échangeur de chaleur (6) étant commun aux deux conduits d'écoulement (4a,4b) ;
- un deuxième échangeur de chaleur (8) agencé en aval, par rapport à l'écoulement d'un flux d'air, du premier échangeur de chaleur (6) et agencé au sein du deuxième conduit d'écoulement (4b)
- un premier volet (20) agencé en aval du deuxième échangeur de chaleur (8) ;
le premier volet (20) pouvant pivoter entre deux positions extrêmes, une première position extrême où ledit volet vient en butée contre la cloison de séparation (5) et/ou le deuxième échangeur de chaleur (8) et une deuxième position extrême où ledit volet vient en appui contre une paroi du boîtier (4) ;
**caractérisé en ce que** le boîtier (4) comprend une paroi de guidage (22) d'un flux d'air agencée au sein du premier conduit d'écoulement (4a) en aval du premier échangeur de chaleur (6) et orientant le premier flux d'air (Fa) en direction du premier volet (20) ;
et **en ce que** le boitier (4) comprend un espace (24) entre la paroi de guidage (22) d'un flux d'air et le premier volet (20) de manière à ce que le premier volet (20) n'est pas apte à venir en butée contre la paroi de guidage (22) d'un flux d'air,
et dans lequel le premier volet (20) pivote dans une position intermédiaire (I) située entre les deux positions extrêmes avec la paroi de guidage (22) d'un flux d'air s'étendant dans une direction (P) et le premier volet (20) comprenant une porte (20b) s'étendant dans une direction (V) ; dans ladite position intermédiaire (I) ladite porte (20b) étant dans le prolongement de la paroi de guidage (22) d'un flux d'air.

2. Dispositif (2) selon la revendication 1, dans lequel le dispositif (2) comprend un troisième échangeur de chaleur (10) agencé en amont du premier échangeur de chaleur (6) par rapport à l'écoulement d'un flux d'air, le troisième échangeur de chaleur (10) étant agencé dans le premier conduit d'écoulement (4a) et dans le deuxième conduit d'écoulement (4b), ledit échangeur de chaleur (10) étant commun aux deux conduits d'écoulement (4a,4b)

3. Dispositif (2) selon l'une des revendications précédentes, dans lequel dans ladite position intermédiaire (I) l'espace (24) entre l'extrémité de la paroi de guidage (22) d'un flux d'air et l'extrémité du premier volet (20) est compris entre 5 et 25 mm, de préférence entre 10 et 15 mm.

4. Dispositif (2) selon l'une des revendications précédentes, dans lequel le premier volet (20) est apte à obturer une bouche d'entrée d'un conduit de sortie (12) lorsque ledit volet est positionné dans la deuxième position extrême.

5. Dispositif (2) selon l'une des revendications précédentes, dans lequel le premier conduit d'écoulement (4a) d'un flux d'air et le deuxième conduit d'écoulement (4b) d'un flux d'air comprennent chacun un chemin de contournement (26,28) du premier échangeur de chaleur (6), les chemins de contournement (26,28) étant agencés de part et d'autre du premier échangeur de chaleur (6).

6. Dispositif (2) selon la revendication 5, dans lequel un deuxième volet (30) est agencé au sein du premier conduit d'écoulement (4a) d'un flux d'air et un troisième volet (32) est agencé au sein du deuxième conduit d'écoulement (4b) d'un flux d'air, lesdits volets étant agencés entre le premier (6) et le troisième (10) échangeur de chaleur de manière à orienter chaque flux d'air respectifs (Fa,Fb) à travers le chemin de contournement (26,28) correspondant et/ou à travers le premier échangeur de chaleur (6).

7. Dispositif (2) selon la revendication 6, dans lequel le premier conduit d'écoulement (4a) d'un flux d'air comprend en outre un quatrième volet (34) agencé au sein du chemin de contournement correspondant (26).

8. Véhicule automobile **caractérise en ce qu'**il comprend un dispositif (2) de chauffage, ventilation et/ou climatisation selon la revendication 4 dans lequel ledit conduit de sortie (12) correspond à la sortie pieds et est configuré pour alimenter en air la zone pieds de l'habitacle.

## Patentansprüche

1. Heizungs-, Lüftungs- und/oder Klimaanlage (2) für Kraftfahrzeuge, umfassend ein Gehäuse (4), wobei das Gehäuse (4) umfasst:
- einen ersten Strömungskanal (4a) für einen ersten Luftstrom (Fa);
- einen zweiten Strömungskanal (4b) für einen zweiten Luftstrom (Fb);
- eine Trennwand (5, 13), die innerhalb des Gehäuses (4) angeordnet ist, um den ersten Strömungskanal (4a) vom zweiten Strömungskanal (4b) zu trennen;
- einen ersten Wärmetauscher (6), der in dem ersten Strömungskanal (4a) und in dem zweiten Strömungskanal (4b) angeordnet ist, wobei der Wärmetauscher (6) beiden Strömungskanälen (4a, 4b) gemeinsam ist;
- einen zweiten Wärmetauscher (8), der in Bezug auf den Luftstrom stromabwärts vom ersten Wärmetauscher (6) und innerhalb des zweiten Strömungskanals (4b) angeordnet ist;
- eine erste Klappe (20), die stromabwärts vom zweiten Wärmetauscher (8) angeordnet ist;
wobei die erste Klappe (20) zwischen zwei Endpositionen schwenkbar ist, einer ersten Endposition, in der die Klappe an der Trennwand (5) und/oder dem zweiten Wärmetauscher (8) anliegt, und einer zweiten Endposition, in der die Klappe an einer Wand des Gehäuses (4) anliegt, und dass das Gehäuse (4) eine Führungswand (22) für einen Luftstrom umfasst, die innerhalb des ersten Strömungskanals (4a) stromabwärts des ersten Wärmetauschers (6) angeordnet ist und den ersten Luftstrom (Fa) in Richtung der ersten Klappe (20) lenkt;
**dadurch gekennzeichnet, dass** das Gehäuse (4) einen Raum (24) zwischen der Luftstrom-Leitwand (22) und der ersten Klappe (20) umfasst, so dass die erste Klappe (20) nicht an der Luftstrom-Leitwand (22) anliegen kann,
wobei die erste Klappe (20) in eine Zwischenposition (I) zwischen den beiden Endpositionen schwenkt, wobei sich die Leitwand (22) eines Luftstroms in einer Richtung (P) erstreckt und die erste Klappe (20) eine Tür (20b) umfasst, die sich in einer Richtung (V) erstreckt; wobei sich die Tür (20b) in der Zwischenposition (I) in der Verlängerung der Leitwand (22) eines Luftstroms befindet.

2. Vorrichtung (2) nach Anspruch 1, wobei die Vorrichtung (2) einen dritten Wärmetauscher (10) umfasst, der in Bezug auf die Strömung eines Luftstroms stromaufwärts des ersten Wärmetauschers (6) angeordnet ist, wobei der dritte Wärmetauscher (10) in der ersten Strömungsleitung (4a) und in der zweiten Strömungsleitung (4b) angeordnet ist, wobei der Wärmetauscher (10) beiden Strömungsleitungen (4a, 4b) gemeinsam ist

3. Vorrichtung (2) nach einem der vorstehenden Ansprüche, wobei in der Zwischenposition (I) der Abstand (24) zwischen dem Ende der Leitwand (22) eines Luftstroms und dem Ende der ersten Klappe (20) zwischen 5 und 25 mm, vorzugsweise zwischen 10 und 15 mm, beträgt.

4. Vorrichtung (2) nach einem der vorstehenden Ansprüche, wobei die erste Klappe (20) eine Einlassöffnung eines Auslasskanals (12) verschließen kann, wenn sich die Klappe in der zweiten Endposition befindet.

5. Vorrichtung (2) nach einem der vorstehenden Ansprüche, wobei der erste Strömungskanal (4a) für einen Luftstrom und der zweite Strömungskanal (4b) für einen Luftstrom jeweils einen Umgehungsweg (26, 28) des ersten Wärmetauschers (6) umfassen, wobei die Umgehungswege (26, 28) auf beiden Seiten des ersten Wärmetauschers (6) angeordnet sind.

6. Vorrichtung (2) nach Anspruch 5, wobei eine zweite Klappe (30) innerhalb des ersten Strömungskanals (4a) eines Luftstroms und eine dritte Klappe (32) innerhalb des zweiten Strömungskanals (4b) eines Luftstroms angeordnet sind, wobei die Klappen zwischen dem ersten (6) und dem dritten (10) Wärmetauscher angeordnet sind, um jeden jeweiligen Luftstrom (Fa, Fb) durch den entsprechenden Umgehungsweg (26, 28) und/oder durch den ersten Wärmetauscher (6) zu leiten.

7. Vorrichtung (2) nach Anspruch 6, wobei der erste Strömungskanal (4a) eines Luftstroms außerdem eine vierte Klappe (34) umfasst, die innerhalb des entsprechenden Umgehungswegs (26) angeordnet ist.

8. Kraftfahrzeug, **dadurch gekennzeichnet, dass** es eine Heizungs-, Lüftungs- und/oder Klimaanlage (2) gemäß Anspruch 4 umfasst, bei der der Auslasskanal (12) dem Fußraumauslass entspricht und so konfiguriert ist, dass er den Fußraum des Fahrgastraums mit Luft versorgt.

## Claims

1. Heating, ventilation, and/or air conditioning device (2) for a motor vehicle comprising a housing (4), said housing (4) comprising:
- a first flow duct (4a) for a first air flow (Fa);
- a second flow duct (4b) for a second air flow (Fb);
- a partition (5, 13) arranged within the housing (4) so as to separate the first flow duct (4a) from the second flow duct (4b);
- a first heat exchanger (6) arranged in the first flow duct (4a) and in the second flow duct (4b), said heat exchanger (6) being common to both flow ducts (4a, 4b);
- a second heat exchanger (8) arranged downstream, with respect to the flow of air, of the first heat exchanger (6) and arranged within the second flow duct (4b);
- a first flap (20) arranged downstream of the second heat exchanger (8);
the first flap (20) being pivotable between two extreme positions, a first extreme position where the flap abuts against the partition (5) and/or the second heat exchanger (8) and a second extreme position where said flap abuts against a wall of the housing (4), and in that the housing (4) comprises an air flow guide wall (22) arranged within the first flow duct (4a) downstream of the first heat exchanger (6) and directing the first air flow (Fa) towards the first flap (20);
**characterized in that** the housing (4) comprises a space (24) between the air flow guide wall (22) and the first flap (20) such that the first flap (20) is not able to abut against the air flow guide wall (22),
in which the first flap (20) pivots to an intermediate position (I) located between the two extreme positions, with the airflow guide wall (22) extending in a direction (P) and the first flap (20) comprising a door (20b) extending in a direction (V); in said intermediate position (I), said door (20b) being in line with the airflow guide wall (22).

2. Device (2) according to claim 1, wherein the device (2) comprises a third heat exchanger (10) arranged upstream of the first heat exchanger (6) with respect to the flow of an air flow, the third heat exchanger (10) being arranged in the first flow duct (4a) and in the second flow duct (4b), said heat exchanger (10) being common to both flow ducts (4a, 4b)

3. Device (2) according to one of the preceding claims, wherein in said intermediate position (I) the space (24) between the end of the guide wall (22) of an air flow and the end of the first flap (20) is between 5 and 25 mm, preferably between 10 and 15 mm.

4. Device (2) according to one of the preceding claims, wherein the first flap (20) is capable of closing an inlet of an outlet duct (12) when said flap is positioned in the second extreme position.

5. Device (2) according to one of the preceding claims, wherein the first air flow duct (4a) and the second air flow duct (4b) each comprise a bypass path (26, 28) around the first heat exchanger (6), the bypass paths (26, 28) being arranged on either side of the first heat exchanger (6).

6. Device (2) according to claim 5, wherein a second flap (30) is arranged within the first air flow duct (4a) and a third flap (32) is arranged within the second air flow duct (4b), said flaps being arranged between the first (6) and third (10) heat exchangers so as to direct each respective air flow (Fa, Fb) through the corresponding bypass path (26, 28) and/or through the first heat exchanger (6).

7. Device (2) according to claim 6, in which the first air flow duct (4a) further comprises a fourth flap (34) arranged within the corresponding bypass path (26).

8. Motor vehicle **characterized in that** it comprises a heating, ventilation, and/or air conditioning device (2) according to claim 4, in which said outlet duct (12) corresponds to the foot outlet and is configured to supply air to the foot area of the passenger compartment.
